# EUROPEAN PATENT SPECIFICATION

(11) **EP 2 514 306 B1**
(45) Date of publication and mention of the grant of the patent: **23.10.2013**
(21) Application number: 11003268.7
(22) Date of filing: 18.04.2011
(51) Int. Cl.: A01K 47/06

(54) **A trap for the collection of honey bee venom**
Falle zum Sammeln von Honigbienengift
Piège pour la collecte de venin d'abeille

(43) Date of publication of application: 24.10.2012
(73) Proprietor: King Saud University, 11421 Riyadh (SA)
(72) Inventor: Al-Ghamdi, Ahmad Al-Khazim, Dr., Riyadh 11451 (SA); Abou-Shaara, Hossam Farag Ibrahim, Riyadh 11451 (SA)
(74) Representative: Goddar, Heinz J.

(56) References cited:
- US-A- 4 254 519
- US-A- 4 739 531
- US-A- 5 004 446

## Description

The present invention relates to a device and a method for collecting bee venom, in particular, by application of an electric current to the bees.

Devices for collecting bee venom of the aforementioned kind are known, for example, from US 4,739,531. The device comprises a frame member with a central opening. An array of spaced electrical conductors extends across the opening and a voltage may be applied between adjacent conductors. The device is further dimensioned to be fitted within a conventional segmented bee colony.

Moreover, US 4,254,519 discloses an apparatus for collecting bee venom by causing a bee to sting a fabric covered glass plate. The apparatus further comprises a plurality of spaced parallel wires, whereby bees coming in contact with the wires receive an electric shock. The apparatus is positioned under the brood chamber of a colony of bees inside a bee hive.

Document US 5,004,446 A discloses a device for collecting bee venom which is mounted on a motor vehicle. The device comprises an operating compartment and a unit for collecting venom by attracting and electrocuting bees. In operation, a substance is sprinkled on wires of an electric grid to lure and enrage bees to attack the unit. When some of the bees fall down on the wires of the electric grid, a weak electric current of low voltage is switched on to stimulate them to sting and discharge the venom onto a receiving plate. Meanwhile, they release warning message substances which then attract more bees to attack the wires of the electric grid. As soon as a certain number of bees have stung the electric grid, an operator raises the voltage of the electric grid at once to kill them.

The known devices for collecting bee venom suffer from the draw back of causing overexcitement inside the beehive and thereby leading to the death of bees. Moreover, by placing the device inside the hive, venom from bees from all different ages is collected.

The present invention provides a device and a method for collecting honey bee venom that avoids causing overexcitement of the bees inside the hive, is specific to collecting venom from bees of a certain age and is independent of a certain hive type.

The above problem is solved by a device according to claim 1 and a method according to claim 9.

In particular, the present invention provides a device for collecting bee venom comprising a housing with an entrance opening for bees and a set of electric conductors being arranged in the housing. The set of electrical conductors comprises at least one primary conductor and at least one secondary conductor electrically insulated from the primary conductor. The at least one primary and the at least one secondary conductors are spaced apart from each other and are simultaneously contactable by a bee. The device further comprises means for applying an electric voltage between the at least one primary and the at least one secondary conductor. Moreover, the housing further has a net separating an exterior from an interior thereof.

The device according to the present invention is independent from the use of a specific bee hive type as it is configured as a stand alone device. In particular, the device of the present invention may be operated outside the bee hive.

The net may, in particular, be a wire net or a mesh. Openings in the net are dimensioned such that the bees cannot pass through the net. The net helps to attract and trap forager bees. In particular, the net allows contact between bees inside the device and hive bees outside the device which makes the bees stay in the device for a longer period. Moreover, the net allows for the hive's scent to distribute inside the device which helps the trapped bees to identify their hive to motivate them to stay inside the device.

The primary and secondary conductors are adapted to be simultaneously electrically contactable by a bee. This may involve the primary and secondary conductors being at least partially free from an insulative coating.

Moreover, the means for applying an electric voltage may comprise a power source like, for example, a battery or a solar cell. Here, it is preferred that the means for applying an electric voltage comprise a battery. This allows for a mode of operation that is independent from external power sources. Alternatively or additionally, the means for applying an electric voltage may comprise external connectors. Here, the required electric voltage may be supplied by an external power source like, for example, an external battery or an adaptor.

Moreover, the housing may be configured such that bees can only enter the housing via the entrance opening. This allows better control of the movement of bees into and out of the device.

In a preferred embodiment, the housing further comprises a door for closing the entrance opening.

The door facilitates trapping the bees inside the housing. In embodiments in which the entrance opening is the only opening in the housing that is dimensioned to let bees in, closing the door effectively locks the bees in.

The door may, in particular, be supported by one or more hinges. Alternatively, the door may be a sliding door which may be moved between an open and a closed position by sliding the door. In another embodiment, the door may comprise a board that can be set into the entrance opening for closing the entrance opening.

According to a preferred embodiment, the device further comprises receiving means for receiving bee venom. The receiving means is arranged between the set of conductors and a bottom of the housing.

The receiving means assists the user to remove the collected bee venom from the device. The receiving means may, in particular, comprise retaining means like a glass sheet, a plastic sheet or a transparent foil. These are preferred as they keep the venom from leaking out. Moreover, they may retain the venom until it has dried. Additionally or alternatively, the receiving means may comprise absorption means like, for example, tissue or a sponge. These have the advantage of being capable of retaining a larger amount of bee venom. The receiving means, may, in particular, be arranged on a bottom side of the device.

It is even more preferred that the receiving means comprises a drawer adapted to be retracted from the housing. The drawer allows to easily move the collected bee venom from the device. The drawer may further comprise a handle. Further, the drawer may be adapted to be operated from outside the housing. Here, the housing does not need to be opened to remove the drawer with the collected venom. The drawer may be equipped with retaining means and/or absorption means, in particular of the aforementioned kinds.

It is even more preferred that the device comprises a protection grid between the receiving means and the set of conductors. The protection grid may, in particular, be adapted to keep the bees from contacting the venom received by the receiving means and for letting bee venom pass through. The protection grid may comprise a mesh or a wire grid. Openings in the protection grid may be sized such that the bees cannot pass through them. In embodiments, in which the receiving means comprise a drawer, the protection grid may be attached to the drawer. Here, when the drawer is moved, also the protection grid is moved. Alternatively, the protection grid may also be attached to the housing. Here, the protection grid stays in place when the drawer is retracted.

In a preferred embodiment, the housing is a box having top and bottom sides, two lateral sides, a front side and a back side, the entrance opening being arranged in the front side. With the housing being in the form of a box, the housing is easy to manufacture. For example, the top, bottom and lateral sides may each comprise a board. In some embodiments, the front side and/or back side may also comprise a board. The boards may, in particular, be made of wood or plastic. If more than one device is being used, the housing being in the form of a box allows stacking the devices one above the other for transport or operation.

It is even more preferred that the net is arranged at the back side of the housing. Here, the net is arranged opposite the entrance opening. As the net helps to attract the bees, the bees inside the housing are lured to the net, away from the entrance opening. Once inside the housing, in these embodiments, the bees are likely to stay inside for a longer time. Moreover, a larger number of bees stays inside the housing when the entrance opening is being closed.

According to a preferred embodiment, the set of conductors comprises a plurality of primary conductors electrically connected to each other and a plurality of secondary conductors electrically connected to each other. With more than one primary and secondary conductor, the probability of a bee spanning the distance between a primary and a secondary conductor and getting an electrical shock is increased. Hence, the amount of collected bee venom is also increased. Moreover, providing a plurality of primary and secondary conductors provides a more efficient usage of the space inside the housing. Each adjacent primary and secondary conductors may be spaced apart from each other at a distance smaller than a body length of the bees. The number of primary conductors may, in particular, be the same as the number of secondary conductors.

It is even more preferred that the primary conductors extend substantially parallel to each other and that the secondary conductors extend substantially parallel to each other. The primary and secondary conductors may extend substantially parallel or transverse to each other. Alternatively or additionally, the plurality of primary conductors may define a plane of primary conductors and the plurality of secondary conductors may define a plane of secondary conductors. The plane of primary conductors may be parallel to the plane of secondary conductors or may include an angle with the plane of secondary conductors. In embodiments in which the planes of primary and secondary conductors are parallel to each other, they may, in particular, be identical or may be spaced at a distance from each other. The distance may, in particular, be between 2 mm and 30 mm, preferably between 5 mm and 20 mm and even more preferably between 6 mm and 15 mm.

According to a preferred embodiment, the electrical conductors are wires. This allows to easily manufacture the device. Moreover, by using wires, the effective area between adjacent primary and secondary wires is increased, thereby increasing the probability of a bee contacting, both, a primary and a secondary conductor. Alternatively, the primary and/or secondary conductors may comprise a metal rod. This helps to improve the mechanical stability of the device.

The wires may, moreover, be attached to pins for supporting them mechanically and/or for contacting them electrically. In embodiments, in which the housing is a box, the wires may, in particular, be attached to the bottom side of the box. In some embodiments, the wires may be attached to the lateral sides. Each wire may, moreover, be supported by two pins.

Moreover, the wires may extend over a cross section of the housing. Here, the space available in the housing is most efficiently used.

The at least one primary and the at least one second conductors are spaced apart from each other at a distance smaller than a body length of the bees. According to a preferred embodiment, the primary and secondary conductors are spaced apart at a distance of between 2 mm and 20 mm, in particular between 5 mm and 16 mm and preferable between 9 mm and 15 mm. This distance is small enough such that a bee can bridge it and it is large enough to effectively fill the space inside the housing with a minimum number of wires.

In some embodiments, the box may further have a height of between 50 mm and 200 mm, in particular, between 80 mm and 150 mm and a width of between 100 mm and 500 mm and, in particular, between 150 mm and 400 mm and preferably between 200 mm and 300 mm, and a depth of between 20 mm and 150 mm, in particular between 30 mm and 100 mm and, preferably, between 40 mm and 70 mm.

Here and in the following, the height of the housing refers to the distance between the top and the bottom side. The width refers to the distance between the two lateral sides and the depth refers to the distance between the front and back sides.

It is even more preferred in these embodiments that the set of conductors comprises two primary conductors and two secondary conductors.

According to a preferred embodiment, the box may have a height of between 50 mm and 200 mm and, in particular, between 80 mm and 150 mm and, preferably, between 100 mm and 140 mm and a width of between 150 mm and 500 mm, in particular between 200 mm and 400 mm and, preferably, between 250 mm and 300 mm and a depth of between 30 mm and 120 mm, in particular, between 50 mm and 100 mm and, preferably, between 60 mm and 90 mm. It is even more preferred in this embodiment that the set of conductors comprises three primary conductors and three secondary conductors.

In a preferred embodiment, the box may have a height of between 90 mm and 200 mm, in particular, between 100 mm and 180 mm and preferably between 120 mm and 150 mm, a width of between 20 mm and 400 mm, in particular between 250 mm and 350 mm and preferably between 280 mm and 320 mm, and a depth of between 50 mm and 120 mm, in particular between 70 mm and 110 mm and, preferably, between 80 mm and 100 mm. It is even more preferred in this embodiment that the set of conductors comprises four primary conductors and four secondary conductors.

In a further aspect of the present invention, a method for collecting bee venom using the device of the aforementioned type is provided, the method comprising the following steps:
(a) positioning the device with open entrance opening,
(b) after an exposure time, closing the entrance opening,
(c) applying an electric voltage between the primary and secondary conductors.

This method avoids the necessity of opening the hive and provides the opportunity for the venom to be collected from in front of the hive very easily. Hence, overexcitement of the bees inside the bee hive is avoided.

In a preferred embodiment, the said step (a) comprises positioning the device with said open entrance opening in a surrounding of a beehive, in particular, an entrance opening thereof.

Positioning the device in a surrounding of a bee hive, may, in particular, comprise positioning the device in front of a bee hive entrance. This method provides an opportunity for more forager bees to enter the device. Here, bee venom is selectively collected mostly from bees that are at least 21 days old. These bees usually carry more venom.
It is even more preferred that, the method further comprises performing the above method steps with at least one additional device, the at least one additional device being of the aforementioned kind.

The exposure time may, additionally or alternatively, be between 60 s and 1 hour, in particular, between 120 s and 0.5 hours and, preferably, between 300 s and 900 s.

In a preferred embodiment, step (a) comprises positioning the device with said open entrance opening directed upwards, and the method further comprises between steps (a) and (b) the step of
(a') shaking a frame with bees above the entrance opening to cause the bees to drop into the housing of the device.

Here, a frame may be taken from a bee hive. The bees from the frame drop into the housing of the device through the entrance opening. This method allows the user to harvest the bee venom from younger bees that usually do not leave their hive.

According to a preferred embodiment, the method further comprises a step of (d) retracting the drawer from the housing. This way, the collected bee venom is easily removed from the device.

Additionally or alternatively, the step of applying an electric voltage may comprise applying an electric voltage of between 1 V and 12 V, in particular between 2 V and 9 V and, preferably between 3 V and 6 V.

Alternatively or additionally, the step of applying an electric voltage may comprise applying a DC voltage, a pulsed DC voltage or an AC voltage. Here, the voltage values in volts given above apply to the absolute maximum of the applied voltage.

In the following, further technical details and advantages of the present invention are illustrated by means of preferred embodiments.
- Figure 1: shows a perspective view of a device according to a first embodiment of the present invention.
- Figure 2: shows a perspective view of a second embodiment of the present invention.
- Figure 3: shows an explosion view of components of a device according to a third embodiment of the present invention.
- Figures 4A, B: each show a different configuration of electrical conductors according to embodiments of the present invention.
- Figure 5: shows components of the device according to an embodiment of the present invention.

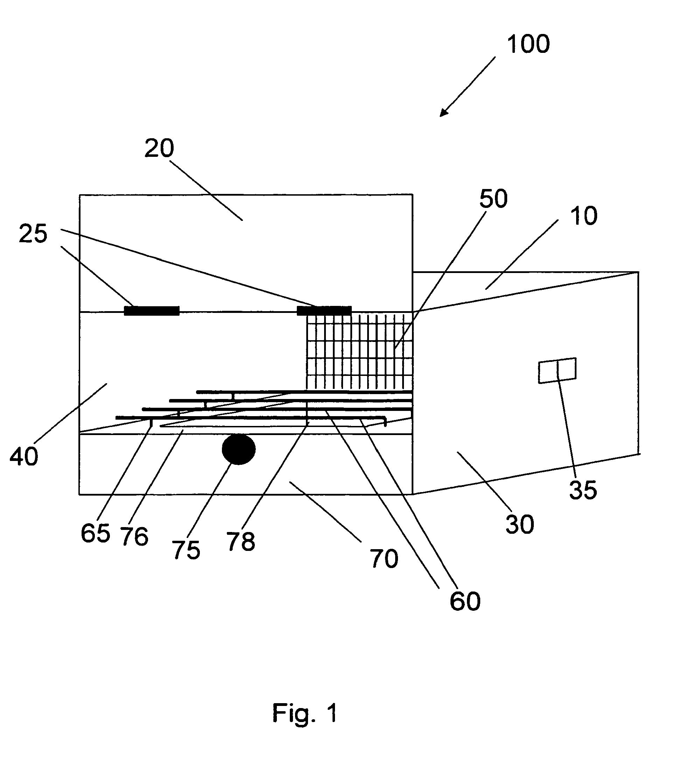

Figure 1 shows a device 100 for collecting bee venom according to an embodiment of the present invention. The device 100 comprises a housing which is in the form of a box. The housing has a top side 10, two lateral sides 30, 40, a bottom side and a back side. The top side 10, the lateral sides 30, 40 and the bottom side each are wooden boards. At the back side of the housing, a wire net 50 is arranged. The wire net 50 separates the interior of the housing from its exterior. Moreover, the housing comprises a door 20 for closing an entrance opening for bees in the housing, which, in the perspective of figure 1, is shown to the front, i.e. toward the viewer. The door is attached to the top side 10 by hinges 25.

While in the embodiment of figure 1, the door 20 is attached to the top side 10 by two hinges 25, other embodiments may use one hinge or even more than two hinges. Moreover, in some embodiments, the door may be attached to a lateral side or the bottom side of the housing by means of one or more hinges.

Returning to figure 1, the device 100 further comprises receiving means with a drawer 70. The drawer 70 is equipped with a handle 75 for opening and closing the drawer. The device 100 further comprises a protection board 76. The protection board 76 is arranged above the receiving means 70. The protection board is attached to the lateral sides 30, 40 of the housing. Moreover, the protection board 76 has a central opening 78.

The device further has a plurality of wire-shaped conductors 60. The wires 60 are parallel to each other and define a plane. The plane of the wires 60 is parallel to the top side 10 and the bottom side of the housing. The wires 60 are mechanically fixed to the protection board 76 by means of pins 56. Each wire is fixed by two pins. Moreover, the wires 60 are electrically connected to a power source inside the housing (not shown). The device is further equipped with a switch 35 on the exterior of the lateral side 30 for turning on and off the voltage of the wires 60. The wires 60 are arranged such that they extend over the central opening 78 of the protection board 76. The wires 60 are connected to the power source such that each two adjacent wires have an opposite polarity.

The device 100 is not a bee hive. In particular, the device 100 is not adapted to house bee frames.

The device 100 of figure 1 may be operated by positioning the device 100 in front of a bee hive entrance with an open door 20. After elapse of a predetermined exposure time, the door 20 may be closed, such that the entrance opening of the housing is closed and the bees are trapped inside the interior of the housing. Subsequently, the switch 35 is operated such that the voltage is applied to the wires 60. While the voltage is applied to the wires 60, any bee touching two adjacent wires gets an electric shock and discharges an amount of venom. The venom drops through the central opening 78 in the protection board 76 into the drawer 70 of the receiving means.

Afterwards, the switch 35 is operated again such that the voltage between the wires 60 is switched off. The door 20 is then opened such that the trapped bees may escape. The collected bee venom may easily be moved from the device by retracting the drawer 70 by its handle 75.

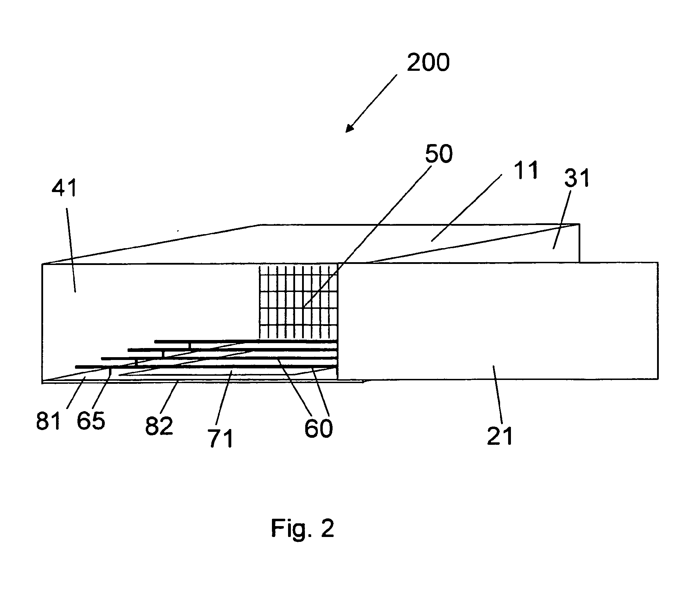

In figure 2, a device 200 according to a second embodiment of the present invention is shown. The device 200 comprises a box-shaped housing with a top side 11, a bottom side 81 and two lateral sides, 31, 41 which are made of wood. The housing further has a back side which is formed of a wire net 50. The wire net 50 is attached to the top side 11, the bottom side 81 and the two lateral sides 31, 41. The housing further has a door 21, which is slidingly engaged with the top side 11 and the bottom side 81. To facilitate moving the door 21, the top side 11 and the bottom side 81 each have a sliding groove 82. In order to facilitate movement of the sliding door 21, lateral side 31 is less deep than the opposite lateral side 41.

The device 200 further comprises a set of wires 60, which are parallel to each other. The wires are attached to the bottom side 81 by means of pins 65. The device 200 further has a plastic foil 71 for receiving the bee venom and the plastic foil 71 is arranged on top of the bottom side 81. The wires 60 extend over a width of the plastic foil 71.

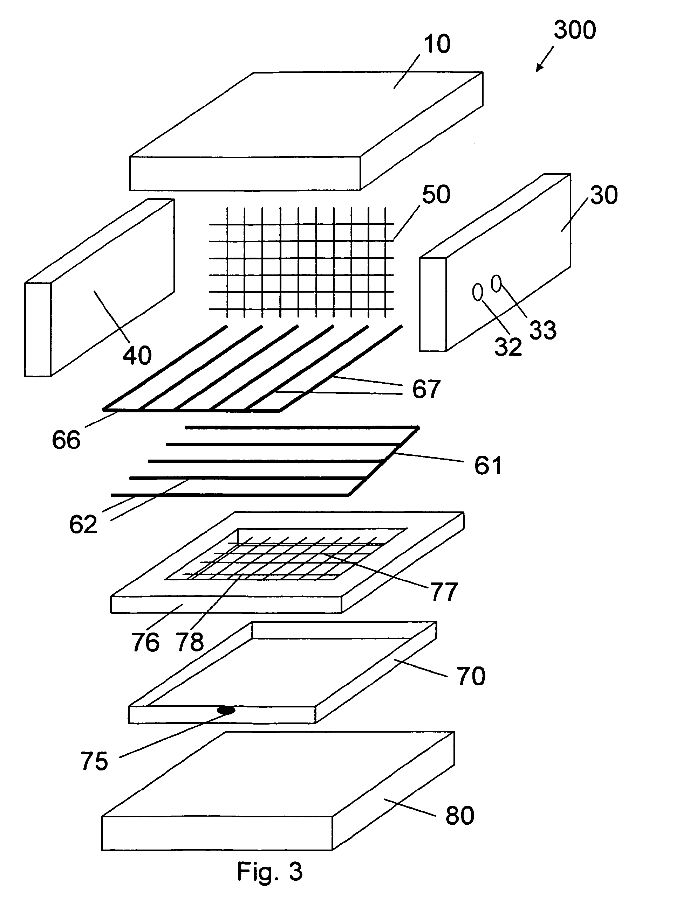

Figure 3 shows a device 300 according to a third embodiment of the present invention. The device 300 has a housing with top, bottom and two lateral sides, each side comprising a respective board. In more detail, the housing comprises a top board 10, a bottom board 80 and two lateral boards 30, 40. The housing further has a back side which is formed by a wire net 50. The front side of the housing (not shown) comprises an entrance opening for bees. Above the bottom board 80, a drawer 70 for receiving bee venom is arranged. The drawer 70 comprises a handle 75. The housing further has a protection board 76 with a central opening 78. The protection board 76 is attached to the lateral boards 30 and 40. The protection board 76 extends parallel to the top board 10 and the bottom board 80. The central opening 78 of the protection board 76 is covered by a protection grid 77. In the embodiment of figure 3, the protection grid is arranged inside the central opening 78. In other embodiments, the protection grid may be arranged on top or below the protection board.

The device 300 of figure 3 further has a set of primary wire-shaped conductors 67 which are electrically connected to each other by a connection 66. Further, the device 300 has a set of secondary wire-shaped conductors 62 which are connected to each other via a connector 61. The primary wires 67 extend parallel to each other and define a primary wire plane. Similarly, the secondary wires 62 extend parallel to each other and define a secondary wire plane. The primary wires and the secondary wires, moreover, extend perpendicularly to each other. The plane of primary wires is, further, offset relatively to the plane of the secondary wires 62.

Moreover, on the exterior of the lateral board 30, two electrical connectors 32 und 33 are attached. Electrical connector 32 is connected with the primary wires 67, while connector 33 is connected to the secondary wires 62 (connections not shown). The connectors 32, 33 are adapted to be connected to an external power source.

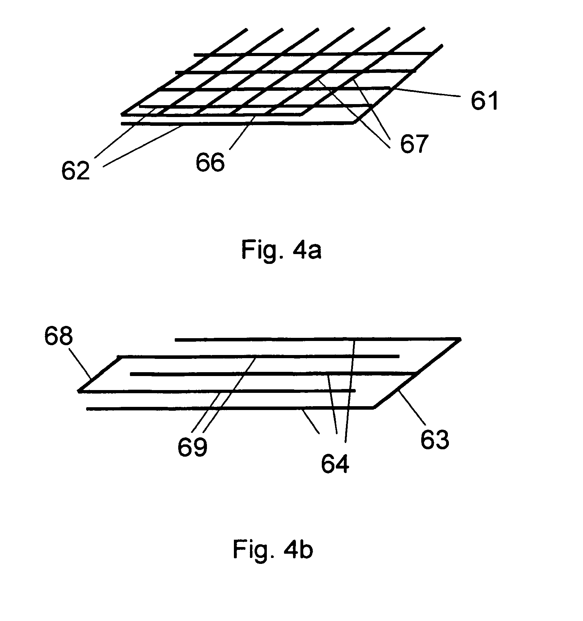

Figure 4A und 4B show a configuration of wire-shaped electric conductors according to embodiments of the present invention. Figure 4A shows the arrangement of wires according to the embodiment of figure 3. Here, a plane of secondary wires 62 is offset from a plane of primary wires 67. Primary wires 67 and secondary wires 62 extend perpendicularly to each other.

Figure 4B shows an arrangement of wire shaped electrical conductors, in which primary wires 64 and secondary wires 69 extend in the same plane and are parallel to each other. Here, primary wires 64 and secondary wires 69 are arranged in an alternating fashion. The wires adjacent to each primary wire 69 are secondary wires 64 and vice versa. The arrangement of figure 4B is preferred over that of 4A as the space inside the housing is more efficiently used.

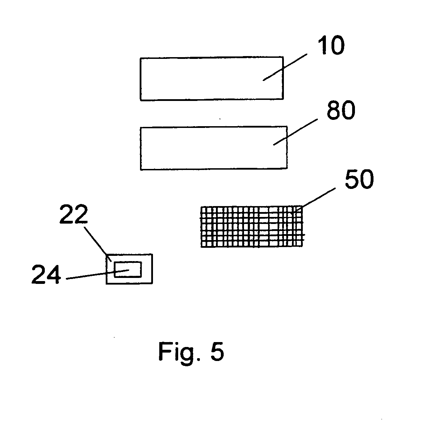

Figure 5 shows components of the device according to an embodiment of the present invention. In particular, the device comprises a top side 10 and a bottom side 80. The device further comprises a net 50 to be arranged at the back side of the housing. In addition, a front side 22 with an entrance opening 24 for bees is comprised by the device.

### Reference numerals

- 100, 200, 300: device
- 10, 11: top side
- 20, 21: door
- 22: front side
- 24: entrance opening
- 25: hinge
- 30, 31, 40, 41: lateral side
- 32, 33: electrical connector
- 35: switch
- 50: net
- 60-69: electrical conductor
- 70: drawer
- 71: plastic foil
- 75: handle
- 76: protection board
- 78: central opening
- 77: protection grid
- 80, 81: bottom side
- 82: sliding groove

## Claims

1. A device (100; 200; 300) for collecting bee venom comprising:
a housing with an entrance opening (24) for bees,
a set of electrical conductors being arranged in the housing,
the set of electrical conductors comprising at least one primary conductor (64; 67) and at least one secondary conductor (62; 69),
the at least one primary (64; 67) and the at least one secondary (62; 69) conductors being spaced apart from each other and being simultaneously contactable by a bee,
wherein the device (100; 200; 300) further comprises means (32, 33) for applying an electric voltage between the at least one primary (64; 67) and the at least one secondary (62; 69) conductors,
wherein the housing further has a net (50) separating an exterior from an interior thereof, **characterized in that**
the housing is a box having top (10; 11) and bottom sides (80; 81), two lateral sides (30, 40; 31, 41), a front side (22) and a back side, the entrance opening (24) being arranged in the front side (22), the net (50) is arranged at the back side of the housing, the net (50) allows contact between bees insided the device (100; 200; 300) and hive bees outside the device (100; 200; 300), and the at least one secondary conductor (62; 69) is electrically insulated from the at least one primary conductor (64; 67).

2. The device (100; 200; 300) of claim 1, wherein the housing further comprises a door (20; 21) for closing the entrance opening.

3. The device (100; 200; 300) of any of the proceeding claims, further comprising receiving means (70; 71) for receiving bee venom arranged between the set of conductors and a bottom of the housing.

4. The device (100; 300) of claim 3, wherein the receiving means comprises a drawer (70) adapted to be retracted from the housing.

5. The device (300) of claim 3 or 4 further comprising a protection grid (77) between the receiving means (70) and the set of conductors.

6. The device (100; 200; 300) of any of the proceeding claims, wherein the set of conductors comprises a plurality of primary conductors (64; 67) electrically connected to each other and a plurality of secondary conductors (62; 69) electrically connected to each other.

7. The device (100; 200; 300) of any of the proceeding claims, wherein the electrical conductors are wires.

8. The device (100; 200; 300) of any of the proceeding claims, wherein the primary (64; 67) and secondary (62; 69) conductors are spaced apart at a distance of between 2 mm and 20mm, in particular between 5 mm and 16 mm and preferably between 9 mm and 15 mm.

9. A method for collecting bee venom using the device (100; 200; 300) of any of claims 1 to 8, the method comprising the following steps:
(a) positioning the device (100; 200; 300) with open entrance opening,
(b) after an exposure time, closing the entrance opening,
(c) applying an electric voltage between the primary (64; 67) and secondary (62; 69) conductors.

10. The method of claim 9, wherein step (a) comprises positioning the device (100; 200; 300) with said open entrance opening in a surrounding of a beehive, in particular, an entrance opening thereof.

11. The method of claim 9, wherein step (a) comprises positioning the device (100; 200; 300) with said open entrance opening directed upwards, and wherein the method further comprises between steps (a) and (b) the step of
(a') shaking a frame with bees above the entrance opening to cause the bees to drop into the housing of the device (100; 200; 300).

## Patentansprüche

1. Vorrichtung (100; 200; 300) zum Sammeln von Bienengift, wobei die Vorrichtung Folgendes umfasst:
ein Gehäuse mit einer Eingangsöffnung (24) für Bienen,
eine Menge von elektrischen Leitern, die in dem Gehäuse angeordnet sind,
wobei die Menge von elektrischen Leitern zumindest einen primären Leiter (64; 67) und zumindest einen sekundären Leiter (62; 69) umfasst,
wobei der zumindest eine primäre (64; 67) und der zumindest eine sekundäre (62; 69) Leiter voneinander beabstandet sind und gleichzeitig von einer Biene kontaktierbar sind,
wobei die Vorrichtung (100; 200; 300) ferner ein Mittel (32, 33) zum Anlegen einer elektrischen Spannung zwischen dem zumindest einen primären (64; 67) und dem zumindest einen sekundären (62; 69) Leiter umfasst,
wobei das Gehäuse ferner ein Netz (50), welches ein Äußeres von einem Inneren da-von trennt, aufweist, **dadurch gekennzeichnet, dass**
das Gehäuse eine Box mit einer Oberseite (10; 11) und einer Unterseite (80, 81), zwei Seitenwänden (30, 40; 31, 41), einer Vorderseite (22) und einer Rückseite ist, wobei die Eingangsöffnung (24) in der Vorderseite (22) angeordnet ist, wobei das Netz (50) an der Rückseite des Gehäuses angeordnet ist, wobei das Netz (50) einen Kontakt zwischen Bienen in der Vorrichtung (100; 200; 300) und Bienen des Stocks außerhalb der Vorrichtung (100; 200; 300) ermöglicht, und wobei der zumindest eine sekundäre Leiter (62; 69) von dem zumindest einen primären Leiter (64; 67) elektrisch isoliert ist.

2. Vorrichtung (100; 200; 300) nach Anspruch 1, wobei das Gehäuse ferner eine Tür (20; 21) zum Schließen der Eingangsöffnung umfasst.

3. Vorrichtung (100; 200; 300) nach einem der vorhergehenden Ansprüche, welche ferner ein Aufnahmemittel (70; 71), das zwischen der Menge der Leiter und einem Boden des Gehäuses angeordnet ist, zum Aufnehmen von Bienengift umfasst.

4. Vorrichtung (100; 200; 300) nach Anspruch 3, wobei das Aufnahmemittel eine Schublade (70), die zum Zurückziehen aus dem Gehäuse eingerichtet ist, umfasst.

5. Vorrichtung (300) nach Anspruch 3 oder 4, welche ferner ein Schutzgitter (77) zwischen dem Aufnahmemittel (70) und der Menge von Leitern umfasst.

6. Vorrichtung (100; 200; 300) nach einem der vorhergehenden Ansprüche, wobei die Menge von Leitern eine Mehrzahl von primären Leitern (64; 67), die elektrisch miteinander verbunden sind, und eine Mehrzahl von sekundären Leitern (62; 69), die elektrisch miteinander verbunden sind, umfasst.

7. Vorrichtung (100; 200; 300) nach einem der vorhergehenden Ansprüche, wobei die elektrischen Leiter Drähte sind.

8. Vorrichtung (100; 200; 300) nach einem der vorhergehenden Ansprüche, wobei die primären (64; 67) und die sekundären (62; 69) Leiter mit einem Abstand von zwischen 2 mm und 20 mm, insbesondere zwischen 5 mm und 16 mm und vorzugsweise zwischen 9 mm und 15 mm voneinander beabstandet sind.

9. Verfahren zum Sammeln von Bienengift, wobei die Vorrichtung (100; 200; 300) nach einem der Ansprüche 1 bis 8 verwendet wird, wobei das Verfahren die folgenden Schritte umfasst:
(a) Positionieren der Vorrichtung (100; 200; 300) mit einer offenen Eingangsöffnung,
(b) nach einer Expositionsdauer, Schließen der Eingangsöffnung,
(c) Anlegen einer elektrischen Spannung zwischen dem primären (64; 67) und dem sekundären (62; 69) Leiter.

10. Verfahren nach Anspruch 9, wobei der Schritt (a) ein Positionieren der Vorrichtung (100; 200; 300) mit der offenen Eingangsöffnung in einer Umgebung eines Bienenstocks, insbesondere einer Eingangsöffnung davon, umfasst.

11. Verfahren nach Anspruch 9, wobei der Schritt (a) ein Positionieren der Vorrichtung (100; 200; 300) umfasst, wobei die offene Eingangsöffnung nach oben gerichtet ist, und wobei das Verfahren ferner zwischen den Schritten (a) und (b) den folgenden Schritt umfasst:
(a`) Schütteln eines Rähmchens mit Bienen über der Eingangsöffnung, um zu bewirken, dass die Bienen in das Gehäuse der Vorrichtung (100; 200; 300) fallen.

## Revendications

1. Dispositif (100 ; 200 ; 300) destiné à recueillir le venin d'abeille comprenant :
un boîtier ayant une ouverture d'entrée (24) pour les abeilles,
un ensemble de conducteurs électriques étant agencés dans le boîtier,
l'ensemble de conducteurs électriques comprenant au moins un conducteur primaire (64 ; 67) et au moins un conducteur secondaire (62 ; 69),
l'au moins un conducteur primaire (64 ; 67) et l' au moins un conducteur secondaire (62 ; 69) des conducteurs étant écartés l'un de l'autre et pouvant être mis en contact simultanément avec une abeille, où le dispositif (100 ; 200 ; 300) comprend en outre un moyen (32, 33) destiné à appliquer une tension électrique entre l'au moins un conducteur primaire (69 ; 67) et l'au moins un conducteur secondaire (62 ; 69) des conducteurs,
où le boîtier comporte en outre un filet (50) séparant son extérieur de son intérieur, **caractérisé en ce que**
le boîtier est une boîte ayant des côtés supérieur (10 ; 11) et inférieur (80 ; 81), deux côtés latéraux (30, 40 ; 31, 41), un côté avant (22) et un côté arrière, l'ouverture d'entrée (24) étant agencée dans le côté avant (22), le filet (50) est agencé au niveau du côté carrière du boîtier, le filet (50) permet le contact entre les abeilles à l'intérieur du dispositif (100 ; 200 ; 300) et les abeilles domestiques en dehors du dispositif (100 ; 200 ; 300), et l'au moins un conducteur secondaire (62 ; 69) est électriquement isolé de l'au moins un conducteur primaire (64 ; 67).

2. Dispositif (100 ; 200 ; 300) de la revendication 1, dans lequel le boîtier comprend en outre une porte (20 ; 21) destinée à fermer l'ouverture d'entrée.

3. Dispositif (100 ; 200 ; 300) de l'une des revendications précédentes, comprenant en outre un moyen de réception (70 ; 71) destiné à recevoir un venin d'abeille agencé entre l'ensemble de conducteurs et une partie inférieure du boîtier.

4. Dispositif (100 ; 200 ; 300) de la revendication 3, dans lequel le moyen de réception comprend un tiroir (70) adapté pour être rétracté du boîtier.

5. Dispositif (300) de la revendication 3 ou 4, comprenant en outre une grille de protection (77) entre le moyen de réception (70) et l'ensemble de conducteurs.

6. Dispositif (100 ; 200 ; 300) de l'une des revendications précédentes, dans lequel l'ensemble de conducteurs comprend une pluralité de conducteurs primaires (64 ; 67) électriquement reliés les uns aux autres et une pluralité de conducteurs secondaires (62 ; 69) électriquement reliés les uns aux autres.

7. Dispositif (100 ; 200 ; 300) de l'une des revendications précédentes, dans lequel les conducteurs électriques sont des fils.

8. Dispositif (100 ; 200 ; 300) de l'une des revendications précédentes, dans lequel les conducteurs primaire (64 ; 67) et secondaire (62 ; 69) sont écartés à une distance comprisse entre 2 mm et 20mm, en particulier entre 5 mm et 16 mm et de préférence entre 9 mm et 15 mm.

9. Procédé destiné à recueillir le venin d' abeille en utilisant le dispositif (100 ; 200 ; 300) selon l'une des revendications 1 à 8, le procédé comprenant les étapes suivantes :
(a) le positionnement du dispositif (100 ; 200 ; 300) ayant une ouverture d'entrée ouverte,
(b) après un temps d'exposition, la fermeture de l'ouverture d'entrée,
(c) l'application d'une tension électrique entre les conducteurs primaire (64 ; 67) et secondaire (62 ; 69).

10. Procédé de la revendication 9, dans lequel l'étape (a) comprend le positionnement du dispositif (100 ; 200 ; 300) ayant ladite ouverture d'entrée ouverte aux alentours d'une ruche, en particulier, une ouverture d'entrée de celle-ci.

11. Procédé de la revendication 9, dans lequel l'étape (a) comprend le positionnement du dispositif (100 ; 200 ; 300) avec ladite ouverture d'entrée ouverte étant dirigée vers le haut, et où le procédé comprend en outre, entre les étapes (a) et (b) l'étape consistant
(a') à agiter un cadre ayant des abeilles au-dessus de l'ouverture d'entrée pour amener les abeilles à tomber dans le boîtier du dispositif (100 ; 200 ; 300).
